# EUROPEAN PATENT APPLICATION

(11) **EP 1 191 803 A1**
(43) Date of publication of application: **27.03.2002**
(21) Application number: 00308190.8
(22) Date of filing: 20.09.2000
(51) Int. Cl.: H04Q 7/34, H04M 3/22

(54) **Method and system for detecting network states of a hierarchically structured network comprising network elements on at least two layers**

(71) Applicant: LUCENT TECHNOLOGIES INC., Murray Hill, New Jersey 07974-0636 (US)
(72) Inventor: Kettschau, Hans Jurgen, 90542 Eckental (DE); Reichenbach, Jörg Arnt, 90402 Nuremberg (DE)
(74) Representative: Buckley, Christopher Simon Thirsk

(57) **Abstract**

The invention relates to a method for the efficient signalling of fault messages of individual network elements (NE, RT, BTS, BSC) within an hierarchically structured network and the detection of a current network state corresponding to reality in order to ensure an easy and rapid search for causal fault sources in order to eliminate these.

According to the invention, it is provided for this purpose initially to detect states which can be allocated to individual network elements (NE, RT, BTS, BSC) on the basis of status messages coming from the respective network elements (NE, RT, BTS, BSC) and then to signal the detected states in dependence on the network topology.

## Description

### Description

The communication networks available today usually comprise a hierarchically configured structure essentially subdivided into at least two individual layers, the layers containing a number of network elements (NE) and a number of network elements together defining one layer.

In this arrangement, the number of network elements increases greatly in the direction of the subordinate layers due to the hierarchical network structure. To identify each individual network element of a layer, each network element is therefore allocated an unambiguous addressing code which, furthermore, also makes it possible to identify the network element of the in each case next higher layer which is connected to it. It is thus possible to reconstruct the complete hierarchical interconnection structure from a central node to a selected network element via the addressing code.

If disturbances, faults or other unwanted defects occur in a network element and/or a connection associated with the network element, these will lead to essentially predefined events, as a rule, such as, for example, alarm and/or warning messages or quite generally status messages which are conventionally forwarded to a central monitoring station, the so-called operation and maintenance centre (OMC), where they are signalled to operating personnel.

Although states occurring in a network element can cause correlated states only in those further network elements which are connected to the causal network element via a physical transmission link, correlated states will primarily occur in network elements logically combined with one another since the logical structure of a communication network is essentially equal to the physical one.

In these cases, in consequence, the operating personnel is very interested in obtaining detailed information on the possible causes of the fault or disturbances which have occurred, by means of the signalled events and/or states, in order to be able to carry out the elimination of fault sources as quickly as possible.

The search for the causal fault sources on the basis of the incoming messages about events is increasingly problematic and requires sophisticated and urgent methods and/or systems, especially due to the continuously increasing size and complexity of networks operated at present or in the future.

At present, however, the methods and/or systems for the appropriate processing of the forwarded events in such a manner that detailed information can be obtained from them, which methods and/or systems are available for this purpose, frequently only offer inadequate or at least not very satisfactory solutions for being able to efficiently signal and/or analyse, in particular, even a large number of incoming network-element-based status messages.

To the present day, for example, successive incoming status messages are signalled in simple lists with chronological structure which either relate to the entire system or to individual selected elements. Especially due to the aforementioned increasing number of network elements of subordinate layers and, at the same time, the increasing size of an entire network and the associated increasing probability of state information items due to correlated, i.e. non-causal events produced, the operating personnel is frequently only able with very great effort to analyse an overview of affected areas and/or elements of the network by means of the individual messages which is true to reality.

However, the more time is needed for finding possible causal fault sources, the more susceptible the entire network will be, and in particular, individual elements and/or associated areas or cells can fail over relatively long periods.

It is thus an object of the invention to signal incoming fault messages from individual network elements generally more efficiently and in an approved manner.

It is also a further object of the invention to demonstrate an approach by means of which the detection of a network state corresponding to reality is greatly facilitated and, as a result, the search for causal fault sources can be carried out much more efficiently so that they can be rapidly eliminated.

The solution of the object according to the invention is characterized in a surprising manner just by means of a method having the features of Claim 1 and by a system and a computer program having the features of Claims 8 and 12, respectively.

Advantageous and/or preferred embodiments and further developments are the subject matter of the respective dependent claims.

According to the invention, it is thus provided, for detecting a network state of a hierarchically structured network, in particular a mobile radio network comprising network elements on at least two layers, to detect states which can be allocated to individual network elements on the basis of corresponding state information items and, in turn, to signal the detected states in dependence on the network topology.

In this connection, it is of advantage that, for the first time, a signalling based on the network topology considerably reduces the indication of redundant information items and ensures the direct detection of the in each case current network state. Moreover, the network structure as such is easily apparent or, respectively, the learning of the network structure and its internal relationships-and links from the incoming status messages of individual elements is made possible.

For the signalling in dependence on the network topology, the addressing code providing for an unambiguous identification of each individual network element is suitably used.

Depending on the specific embodiment of the network, it is of advantage to carry out a weighting of the reported states so that relatively severe and less severe disturbances are easily detected or distinguished from one another, respectively, especially with respect to the entire network, and elimination measures are correspondingly coordinated depending on urgency.

In a practical embodiment, the invention also provides that the signalling is carried out in dependence on selectable information items so that application-specific network structures and/or environmental conditions can be taken into consideration in an improved manner.

For the improved allocation of possible causal error sources, it is also provided to carry out the signalling of the detected states on the basis of an allocation of the respectively associated network elements to network branches and/or network elements connected thereto.

In a further embodiment, the invention provides for carrying out the signalling visually and/or aurally in order to emphasize in particular severe network states selectively, for example by coloured graphical design and/or by suitably state-specific aural warning signals.

In this context, in particular, signalling by means of a tree structure and/or taking into consideration selectable network layers has been successful for a clear visual display.

A system for the detection of network states designed in accordance with the invention comprises a device for detecting states reported- by individual network elements and a device which processes the detected states in dependence on the network structure and supplies the states processed in this manner to a device for signalling.

In the text which follows, the invention will be described in detail in an illustrative manner, referring to preferred embodiments and taking into consideration the attached drawings, in which:
- Figure 1: diagrammatically shows the diagram of address coding of network elements by means of an illustrative hierarchical three-layer structure,
- Figure 2: diagrammatically shows the section of a hierarchically structured arrangement of network elements on the example of a GSM network,
- Figure 3: diagrammatically shows the detection of network states by means of a first embodiment according to the invention,
- Figure 4: diagrammatically shows the detection of network states by means of a second embodiment according to the invention, and
- Figure 5: diagrammatically shows a surveillance monitor, which lists the signalling of network states, on the basis of temporally successive status messages of the prior art.

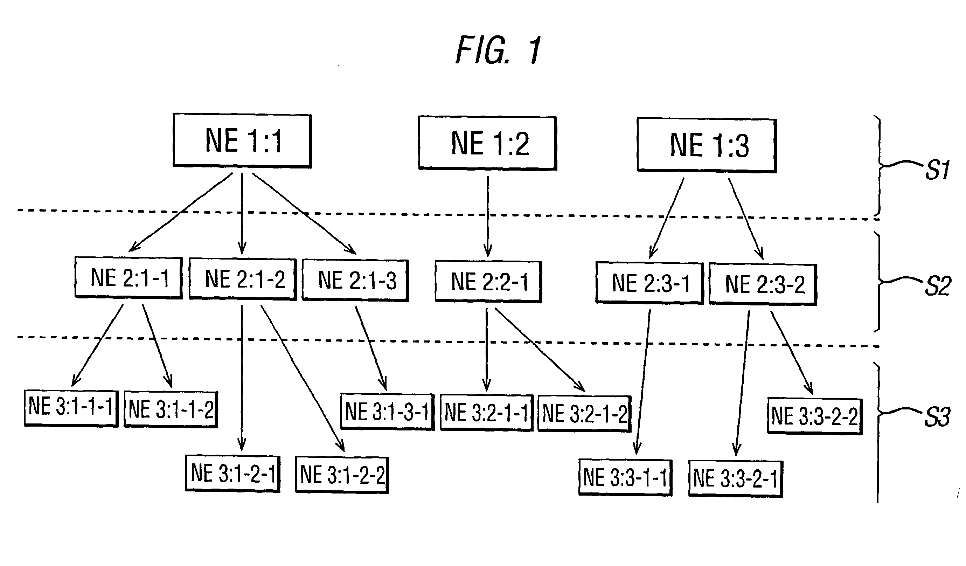

The text which follows initially refers to Figure 1 which, by way of example, shows a coding arrangement for the unambiguous addressing of network elements NE of a three-layer network.

The first network element "NE 1:1", shown on the left in the figure, of three network elements NE forming a first layer S1 is connected to three further network elements from a subordinate layer S2. Of these three, the first network element "NE 2:1-1", in turn, is connected to two network elements "NE 3:1-1-1" and "NE 3:1-1-2" of the next subordinate layer S3. The second network element "NE 2:1-2" of layer S2 is also connected to two and the third network element "NE 2:1-3" of layer S2 is also connected to one subordinate network element of layer S3.

Similarly, the other two network elements "NE 1:2" and "NE 1:3" of the top layer S1 form respective links with subordinate network elements. As a consequence of this strictly defined hierarchical structure, one which is built up from the "top down" in the present example, each network element can be allocated an address for the unambiguous identification in a manner known per se to the expert.

In the present example, the address code contains the identification of the respective layer as the first digit, and the subsequent digits contain the orders of priority of the individual network elements within a respective layer which are connected to one another from the "top down", including the selected network element. In consequence, the complete network, structured like a tree, can be reconstructed by means of such addressing.

However, the larger the network as such and the more layers are defined, the more complex the structure of the network becomes since, as can be seen from Figure 1, the number of network elements greatly increases, as a rule, with an increasing number of layers.

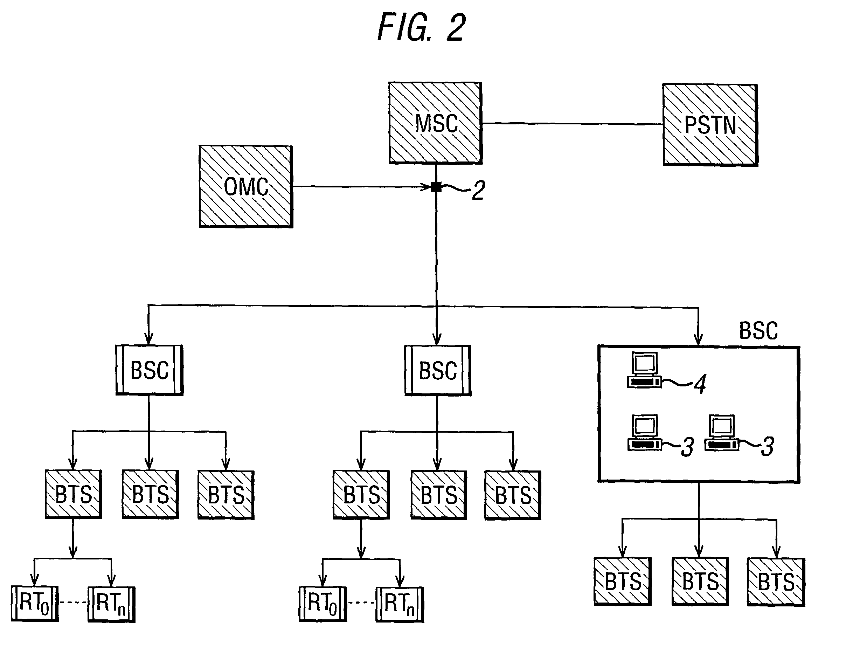

This is illustrated in the example of a GSM network shown simplified in a section in Figure 2. An operation and maintenance centre OMC is connected via an appropriate interface 2 to a mobile switching centre MSC which is coupled to the public switched telephone network PSTN. In each case, base transceiver stations BTS establish at least one GSM cell and provide the radio channels for signalling and user traffic in this cell. To keep the BTS small, the essential control and protocol intelligence is moved to base station controllers BSC which, as shown by way of example in the BSC drawn on the right in Figure 2, can comprise a separate cell workstation 3 or a common workstation 4 for each cell. The BTS and BSC together form a base station subsystem BSS, where a number of BTSs, in each case three in the present example, can be controlled by one BSC. However, the number of BTSs which are connected to the OMC via the BSC can be several hundred. Each BTS, in turn, comprises a number of radio terminals RT₀ to RTₙ, so-called transceivers for dealing with one radio channel in each case, by means of which a number of mobile telephones can be served.

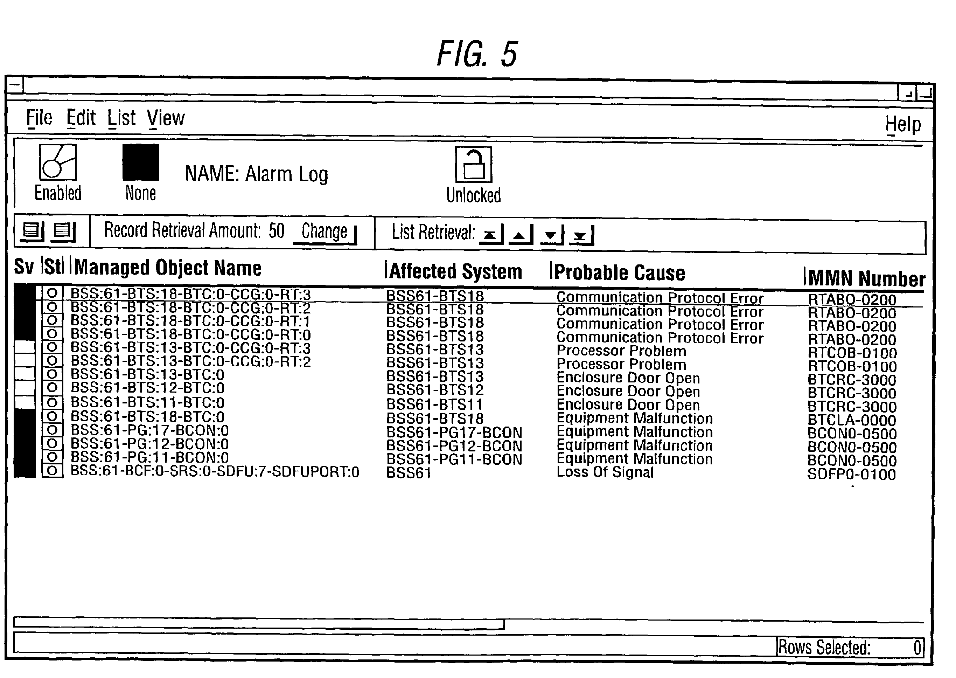

The occurrence and reporting, respectively, of faults and/or disturbances of individual network elements is indicated chronologically listed in the operation and maintenance centre OMC in the implementations used at present, as can be seen, for example, in Figure 5. From top to bottom in the order of arrival in time, the element signalling a status message is listed in the column "managed object name". In the subsequent columns of the supervisory monitor shown in Figure 5, affected areas and possible fault causes, in particular, are listed in parallel.

The position of a network element within the communication network can be seen from the respective address code. In Figure 5, all network elements signalling a status message are thus in the base station subsystem 61 (BSS:61), the first three status messages which have been received following one another in time having been signalled, for example, by transceivers RT:3, RT:2 and RT:1, the connecting paths of which extend via base station BTS:18 and associated so-called "base transceiver controllers" and "central clock generator" units BTC:0 and CCG:0, respectively, in the base station subsystem 61.

As can be seen from Figure 5, the indication contains an abundance of redundant information due to the chronologically arranged signalling of each incoming network-element-based status message. The expert can see that, the more complex the network structure, the more obscure this type of signalling will become if long lists with much redundant information are displayed.

As a consequence, it is difficult to analyse common links, possible nodes and/or interfaces in order to locate an actually causal fault source. Firstly, a large number of redundant information items must be taken into consideration, essentially due to the temporal order of arrival of various status messages, before internal network structures which are causally or consequentially affected can be extracted by the user or the operating personnel.

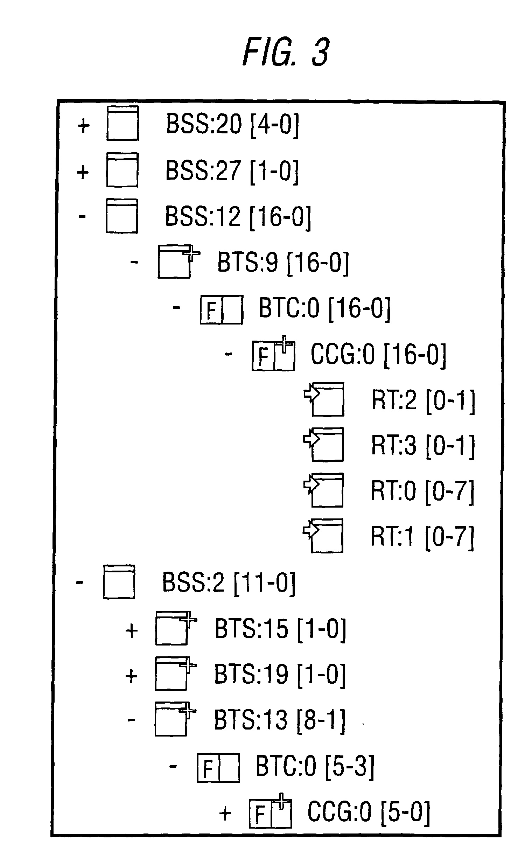

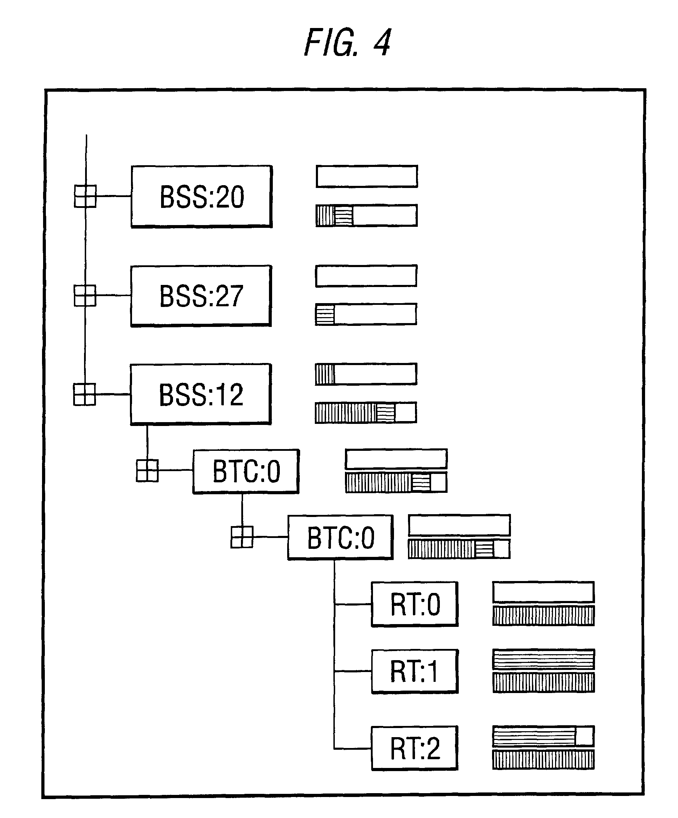

The detection of current network states as a consequence of signalling according to the invention is shown in Figures 3 and 4 by way of example.

Utilizing the address allocated to a respective network element for its unambiguous identification, all received status messages from network elements affected by faults or disturbances are processed on the basis of the topological network structure and arranged in a type of tree diagram which reflects the network structure. The processing is done suitably within an operation and maintenance centre of the network by means of an appropriately adapted processor device and/or an implemented computer program.

Thus, the information contained in the status messages of the individual network elements can be subsequently signalled in a compact and very clear format, in particular on a supervisory monitor.

As is known, for example, from Microsoft Explorer, conventional, branching-capable dendogram implementations can already be used for displaying in a practical manner individual layers with an overview of an accumulation of fault messages in subsequent or subordinate layers and/or specific selected network elements with their state information items sent out.

In detail, Figure 3 shows a representation for detecting current network states, in which the accumulated number of status messages of individual part-links and/or individual network elements provides for rapid identification of areas with problems.

In the case of elements preceded by "+", such as, for example, elements BSS:20 or BTS:15, subsequent links can be "opened" for viewing whereas in the case of elements preceded by "-", such as, for example, elements BSS:12 or BTS:13, subsequent links opened for viewing can be "closed" again with respect to their representation.

In this illustrative embodiment, the first digit of the digits indicated in the respective square brackets behind an element characterizes the total number of status messages which have occurred within subsequent links. The second digit in each case, in contrast, characterizes the number of status messages themselves sent out by the special selected network element.

If, as in the present example for the base station subsystem 12, the character sequence BSS:12 [16-0] is signalled, this means, in consequence, that a total of 16 fault or disturbance messages have occurred in the subordinate network branches connected to one another via the base station subsystem 12, no fault messages having been sent out by elements of the top layer of the base station subsystem 12, i.e. essentially by the base station controllers BSC themselves.

Furthermore, a transceiver forms the smallest physical unit in the network, there also additionally being the channels corresponding to the physical time slots in the logical tree. In consequence, the character sequence RT:1 [0-7] in Figure 3 signifies, with respect to the status messages relating to transceiver RT1, that a total of 0 fault or disturbance messages have occurred in the associated channels. However, 7 fault messages have been forwarded to the operation and maintenance centre OMC by the transceiver itself.

More detailed information which, however, is not shown, especially with respect to the cause of the present reported disturbance itself, can be called up by deliberately selecting a respective element, for example via an input keyboard.

In Figure 4, the state of the network or, respectively, of individual part-link structures of the network are graphically signalled in deviation from the embodiment according to Figure 3. Each indicated element such as, for example, the aforementioned BSS:12 and RT:1 is associated with two bar graphs of which the top one in each case reproduces the state of the selected element and the bottom one in each case reproduces the state of subsequent part-links starting from the selected element. Furthermore, individual status messages are weighted to high- or higher-priority messages and lower- or possibly medium-priority messages.

In consequence, the user or, respectively, the operating personnel of the Operation and Maintenance Centre OMC can focus on individual network areas which have faults and selectively extract these areas on a monitor in order to obtain more detailed views whilst more uninteresting areas, i.e. especially areas or network structures without faults, can only be displayed in compressed form.

In Figure 4, a bar which is completely or partially transversely striped characterizes a corresponding accumulation of high-priority messages and a bar which is completely or partially longitudinally striped characterizes a corresponding accumulation of medium-priority messages.

With reference to the base station subsystem 12, Figure 4 thus indicates by means of the lower bar that a number of more heavily weighted and some more lightly weighted fault or disturbance states have occurred in subsequent branches, the top bar indicating that as a result, essentially as a consequence of these disturbance states, the element BSS:12 has also itself partially assumed a more heavily weighted disturbance state.

With respect to the transceiver RT:1, for example, the lower bar characterizes that the complete channel range available for utilization is subject to a disturbance state with heavy weighting, transceiver RT:1 itself also signalling a faulty state, but of lighter weighting, as a consequence.

On the basis of the embodiments of Figures 3 and 4 described by way of example above, it can be seen that the invention takes into consideration structural dependences or, respectively, interrelationships of a communication network in the processing and signalling of network-element-specific status messages received in an operation and maintenance centre, which leads to considerable reduction in redundancy with respect to the information associated with the messages. The type of presentation made possible by this, which is much more compact compared with the prior art, ensures that, in particular, the operating personnel finds its way within the network structures and/or layers in a much simpler and faster and especially selective manner.

Since the detection of an in each case current network state, including the basic network structure, takes place by allocating faulty network elements within the network topology, this considerably facilitates the analysis of incoming information, especially for the purpose of finding the causal fault sources and, in addition, offers the learning of logical and/or physical link structures in the network.

However, it should be pointed out that, in particular, the weighting of individual events and/or the type of indication or displaying of selected states and/or accumulations of messages, for example by means of graphical diagrams and/or aural signals, can vary depending on the field of application within the protective cover of the invention.

## Claims

1. Method for detecting a network state of an hierarchically structured network comprising at least two layers (S1, S2, S3) with network elements (NE, RT, BTS, BSC), especially a mobile radio network, comprising the following steps:
detecting states which can be allocated to individual network elements (NE, RT, BTS, BSC) on the basis of status messages coming from the respective network elements (NE, RT, BTS, BSC),
signalling the detected states in dependence on the network topology.

2. Method according to Claim 1, further **characterized in that**, for the purpose of signalling the detected states, the respectively associated network elements (NE, RT, BTS, BSC) are allocated within the network topology, especially on the basis of an address which is in each case allocated to the network elements (NE, RT, BTS, BSC) for unambiguous identification.

3. Method according to Claim 1 or 2, further **characterized in that** the detected states are weighted.

4. Method according to one of Claims 1 to 3, further **characterized in that** the signalling is carried out in dependence on selectable information items contained, in particular, in the status messages.

5. Method according to one of Claims 1 to 4, further **characterized in that** the signalling of the detected states is carried out by means of an allocation of the respectively associated network elements (NE, RT, BTS, BSC) to network branches and/or network elements (NE, RT, BTS, BSC) connected thereto, especially from higher layers.

6. Method according to one of Claims 1 to 5, further **characterized in that** the signalling is effected in a visual and/or aural manner.

7. Method according to one of Claims 1 to 6, further **characterized in that** the signalling is carried out by means of a tree structure and/or taking into consideration selectable network layers (S1, S2, S3).

8. System for detecting network- states of a hierarchically structured network comprising at least two layers (S1, S2, S3) with network elements (NE, RT, BTS, BSC), especially a mobile radio network, comprising:
- a device for centrally detecting states reported by network elements (NE, RT, BTS, BSC),
- a device which processes the detected states in dependence on the network structure and supplies the states processed in this manner to a device for signalling.

9. System according to Claim 8, further **characterized in that** the device comprises a facility which, for processing the detected states, allocates the respectively associated network elements (NE, RT, BTS, BSC) to network branches and/or network elements (NE, RT, BTS, BSC) connected thereto, on the basis of an address in each case allocated to the network elements (NE, RT, BTS, BSC) for unambiguous identification.

10. System according to Claim 8 or 9, further **characterized by** a facility for visual and/or aural indication.

11. System according to Claim 8 or 9, further **characterized by** a facility for weighting the detected states in dependence on definable information contents.

12. Computer program for carrying out a method according to one of Claims 1 to 7, especially for use in a system according to one of Claims 8 to 11.
